# EUROPÄISCHE PATENTSCHRIFT

(11) **EP 0 963 679 B1**
(45) Veröffentlichungstag und Bekanntmachung des Hinweises auf die Patenterteilung: **19.10.2005**
(21) Anmeldenummer: 98912257.7
(22) Anmeldetag: 17.02.1998
(51) Int. Cl.: H04Q 11/04

(54) **VERFAHREN UND VORRICHTUNG ZUM VERARBEITEN UND GENERIEREN VON DATEN UNTER VERWENDUNG EINES DIGITALEN SIGNALPROZESSORS**
METHOD AND DEVICE FOR PROCESSING AND GENERATING DATA USING A DIGITAL SIGNAL PROCESSOR
PROCEDE ET DISPOSITIF POUR LE TRAITEMENT ET LA GENERATION DE DONNEES IMPLIQUANT L'UTILISATION D'UN PROCESSEUR DE SIGNAUX NUMERIQUE

(30) Priorität: 25.02.1997 DE 19707489
(43) Veröffentlichungstag der Anmeldung: 15.12.1999
(73) Patentinhaber: Infineon Technologies AG, 81669 München (DE)
(72) Erfinder: KARMAZIN, Pavel, D-82131 Gauting (DE)
(74) Vertreter: Jannig, Peter
(86) Internationale Anmeldenummer: PCT/DE1998/000467
(87) Internationale Veröffentlichungsnummer: WO 1998/038830

(56) Entgegenhaltungen:
- EP-A- 0 585 480
- EP-A- 0 691 796
- WO-A-97/35251
- DE-A- 4 414 554
- PATENT ABSTRACTS OF JAPAN vol. 095, no. 002, 31. März 1995 & JP 06 326870 A (MATSUSHITA GRAPHIC COMMUNINCATION SYSTEMS, INC.), 25. November 1994

## Beschreibung

Die vorliegende Erfindung betrifft eine Vorrichtung gemäß dem Oberbegriff von Patentanspruch 1, d.h. eine Vorrichtung zum Verarbeiten und Generieren von Daten unter Verwendung eines digitalen Signalprozessors.

Derartige Verfahren und Vorrichtungen kommen beispielsweise, aber bei weitem nicht ausschließlich in ISDN-Nebenstellenanlagen zum Einsatz. ISDN-Nebenstellenanlagen sind in der Regel beim Telekommunikations-Teilnehmer aufgestellte Anlagen, über die eine Vielzahl von daran angeschlossenen Telekommunikationsendeinrichtungen (Telefone, Telefaxgeräte, Modems und dergleichen) untereinander und/oder mit einem oder mehreren, ebenfalls daran angeschlossenen Teilnehmeranschlüssen (Amtsleitungen) eines Telekommunikationsnetzes verbindbar sind.

Aus Patent Abstracts of Japan vol. 095, no. 002, 31. März 1995 & JP 06 326870 A ist beispielsweise eine Vorrichtung bekannt, die zur effizienteren Verarbeitung von Daten, die zwischen einem Modem und einem Fax ausgetauscht werden, ein dual port RAM aufweist. Das dual port RAM ist dabei simultan von dem Modem und dem Fax beschreib- und lesbar. Das Modem weist einen Signalrpozessor, der die Daten prozessiert, und einen dem Signalprozessor vorgeschalteten Front-End-Prozessor, die die Daten vorverarbeitet, auf.

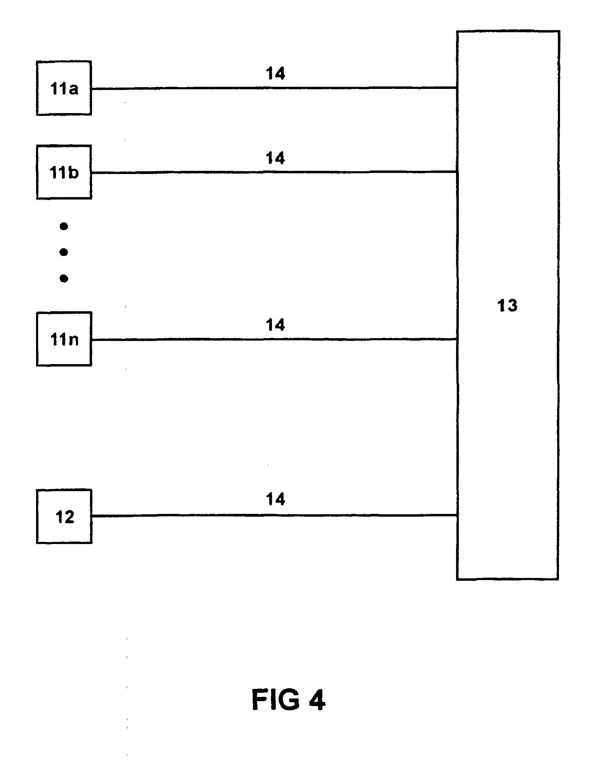

Der herkömmliche Aufbau einer ISDN-Nebenstellenanlage ist in der Figur 4 gezeigt. Demnach umfaßt die Nebenstellenanlage eine oder mehrere Sende/Empfangseinrichtungen (Transceiver) 11a, 11b, ... 11n, einen digitalen Signalprozessor 12 und eine Steuer- und Schalteinrichtung 13; die Sende/Empfangseinrichtungen 11a, 11b, ... 11n und der digitale Signalprozessor 12 sind über Verbindungsleitungen 14 mit der Steuer- und Schalteinrichtung 13 verbunden.

An die Sende/Empfangseinrichtungen 11a, 11b, ... 11n sind in der Figur 4 nicht gezeigte Telekommunikationsendeinrichtungen und/oder eine oder mehrere Amtsleitungen anschließbar. Die Anzahl der vorzusehenden Sende/Empfangseinrichtungen 11a, 11b, ... 11n richtet sich nach der Anzahl und den Typen der anzuschließenden Telekommunikationsendeinrichtungen und Amtsleitungen. Beim betrachteten Beispiel möge die Sende/Empfangseinrichtung 11a zum Anschluß einer oder mehrerer herkömmlicher (analog arbeitender) Telekommunikationsendeinrichtungen, die Sende/Empfangseinrichtung 11b zum Anschluß einer oder mehrerer (digital arbeitender) ISDN-Telekommunikationsendeinrichtungen, und die Sende/Empfangseinrichtung 11n zum Anschluß einer oder mehrerer ISDN-Amtsleitungen ausgelegt (aufgebaut und/oder konfiguriert) sein.

Über eine Amtsleitung eingehende Rufe werden über die Sende/Empfangseinrichtung 11n zur Steuer- und Schalteinrichtung 13 und von dort zu der durch den Ruf angesprochenen Telekommunikationsendeinrichtung weitergeleitet; von den Telekommunikationsendeinrichtungen abgehende Rufe werden ebenfalls zur Steuer- und Schalteinrichtung 13 geführt und von dort zum Bestimmungsort, welches eine andere der an die Nebenstellenanlage angeschlossenen Telekommunikationsendeinrichtungen oder eine der angeschlossenen Amtsleitungen sein kann, durchgeschaltet.

Dem Signalprozessor 12 werden von der Steuer- und Schalteinrichtung 13 sämtliche Daten und Informationen zugeführt, die die Nebenstellenanlage von den Telekommunikationsendeinrichtungen und den Amtsleitungen empfängt. Er verarbeitet die erhaltenen Daten bei Bedarf zu modifizierten Daten oder generiert neue Daten und gibt diese an die Steuer- und Schalteinrichtung 13 aus bzw. zurück. Die Steuer- und Schalteinrichtung 13 empfängt diese Daten und gibt sie anstelle der von den Telekommunikationsendeinrichtungen und den Amtsleitungen erhaltenen Daten zu den angesprochenen Telekommunikationsendeinrichtungen und Amtsleitungen aus.

Dadurch können, um nur einige von nahezu beliebig vielen Beispielen zu nennen, unter anderem
- bestimmte Signaltöne (Freizeichen, Besetztzeichen) und/oder bestimmte Meldungen (beispielsweise ein Hinweis darauf, daß keine Verbindung zustandekommt, weil von einer Telekommunikationsendeinrichtung mit Dienstekennung "Telefon" eine Telekommunikationsendeinrichtung mit Dienstekennung "Telefax" angerufen wird) und dergleichen generiert werden,
- das von einem Teilnehmer ins Telefon Gesagte bei diesem zum Mithören gedämpft wiedergegeben werden, und
- mehr als zwei Teilnehmer und/oder Telekommunikationsendeinrichtungen miteinander verbunden werden (Konferenzschaltung).

Die Erfahrung zeigt jedoch, daß die hierzu vom Signalprozessor zu bewältigenden Aufgaben diesen sehr schnell an die Grenze seiner Leistungsfähigkeit bringen. Die Folge ist, daß entweder mehrere Signalprozessoren eingesetzt werden müssen oder auf bestimmte Komfortmerkmale der Nebenstellenanlage verzichtet werden muß. Dies stellt erkennbar einen nicht unerheblichen Nachteil dar.

Der vorliegenden Erfindung liegt daher die Aufgabe zugrunde, die Vorrichtung gemäß dem Oberbegriff des Patentanspruchs 1 derart weiterzubilden, daß selbst ein arbeitsintensives Verarbeiten und Generieren von Daten mit leistungsschwachen und/oder einer minimalen Anzahl von Signalprozessoren bewerkstelligbar ist.

Diese Aufgabe wird erfindungsgemäß durch die im kennzeichnenden Teil des Patentanspruchs 1 beanspruchten Merkmale gelöst.

Demnach ist vorgesehen, daß eine dem Signalprozessor zugeordnete Schnittstelleneinheit vorgesehen ist, welche die zu verarbeitenden Daten und/oder zur Verarbeitung und/oder Generierung von Daten benötigte Daten einliest, vorverarbeitet und zur Abholung durch den Signalprozessor bereitstellt und/oder vom Signalprozessor verarbeitete oder generierte und zur Abholung bereitgestellte Daten abholt, nachverarbeitet und ausgibt. Dazu weist die Schnittstelleneinheit eine zur Vor- und Nachverarbeitung der Daten vorgesehene Vor- und Nachverarbeitungseinrichtung und eine für die Bereitstellung der vorverarbeiteten und nachzuverarbeitenden Daten zur Abholung durch den Signalprozessor oder die Vor- und Nachverarbeitungseinrichtung vorgesehene Speichereinrichtung auf. Die Vor- und Nachverarbeitungseinrichtung weist eine Expandier/Komprimiereinrichtung auf, durch welche die eingelesenen Daten expandierbar und die auszugebenden Daten komprimierbar sind. Die Speichereinrichtung ist derart ausgebildet, daß die Vor- und Nachverarbeitungseinrichtung und der Signalprozessor quasi gleichzeitig lesend und/oder schreibend darauf zugreifen können. Erfindungsgemäß ist die Speichereinrichtung in vier Speicherbereiche unterteilt ist, von welchen zwei Speicherbereiche zum Beschreiben durch die Vor- und Nachverarbeitungseinrichtung und Auslesen durch den Signalprozessor, und von welchem die anderen zwei Speicherbereiche zum Beschreiben durch den Signalprozessor und Auslesen durch die Vor- und Nachverarbeitungseinrichtung reserviert sind.

Die Ein- und/oder Ausgabe von Daten und deren Vor- und/oder Nachverarbeitung durch die dem Signalprozessor zugeordnete Schnittstelleneinheit entlasten den Signalprozessor ganz erheblich und ermöglichen es dadurch, daß dieser im wesentlichen seine volle Leistungsfähigkeit für die eigentliche Datenverarbeitung und/oder Datengenerierung zur Verfügung stellen kann.

Es wurde daher eine Vorrichtung gefunden, durch welche selbst ein arbeitsintensives Verarbeiten und Generieren von Daten mit leistungsschwachen und/oder einer minimalen Anzahl von Signalprozessoren bewerkstelligbar ist.

Gleichzeitig kann die den Signalprozessor entlastende Schnittstelleneinheit aber relativ einfach ausgebildet sein und betrieben werden, weil sich deren Funktion darauf beschränken kann, einfache, aber in der Summe zeitaufwendige Vor- und/oder Nachbearbeitungsschritte wie beispielsweise Seriell/Parallel- bzw. Parallel/Seriell-Wandlungen, tabellengestütze Codierungen oder Decodierungen etc. durchzuführen.

Vorteilhafte Weiterbildungen der Erfindung sind Gegenstand der Unteransprüche.

Die Erfindung wird nachfolgend anhand eines Ausführungsbeispiels unter Bezugnahme auf die Zeichnung näher erläutert. Es zeigen
- Figur 1: ein Blockschaltbild einer erfindungsgemäß ausgebildeten und betreibbaren ISDN-Nebenstellenanlage,
- Figur 2: eine Darstellung zur Veranschaulichung des IOM-2-Standards,
- Figuren 3A und 3B: Darstellungen zur Veranschaulichung des Aufbaus und der Verwendung einer Speichereinrichtung, in welcher durch eine Schnittstelleneinheit vorverarbeitete Daten zur Abholung und Weiterverarbeitung durch den Signalprozessor und durch den Signalprozessor verarbeitete oder generierte Daten zur Abholung und Weiterverarbeitung durch die Schnittstelleneinheit bereitgestellt werden, und
- Figur 4: ein Blockschaltbild einer herkömmlichen ISDN-Nebenstellenanlage.

Die Erfindung wird nachfolgend anhand einer ISDN-Nebenstellenanlage bzw. - allgemeiner ausgedrückt - einer amts- oder teilnehmerseitigen ISDN-Vermittlungsanlage beschrieben. Wenngleich die Erfindung dort sehr nutzbringend einsetzbar ist, besteht keine Einschränkung auf eine derartige Verwendung der Erfindung; grundsätzlich ist sie in beliebigen Vorrichtungen für beliebige Zwecke einsetzbar.

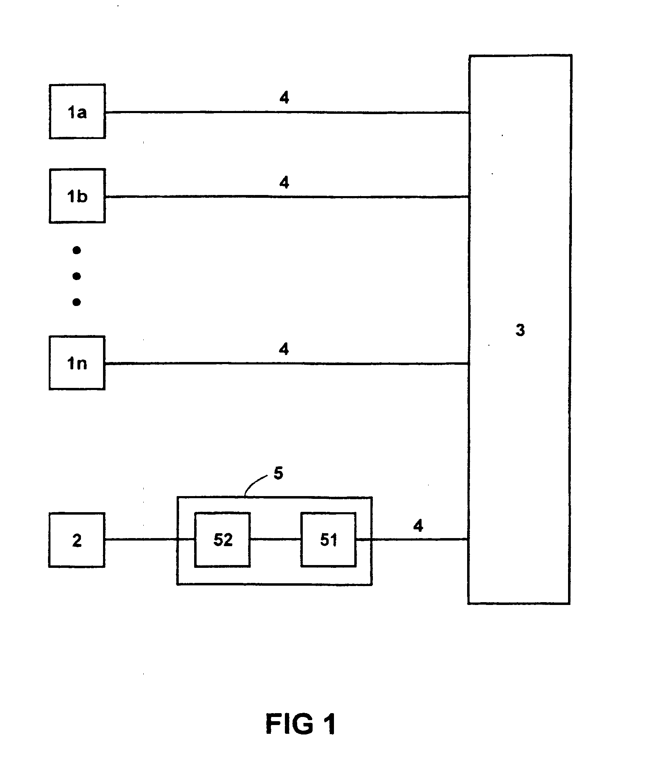

Die nachfolgend näher beschriebene ISDN-Nebenstellenanlage ist in der Figur 1 als Blockschaltbild dargestellt. Sie umfaßt eine oder mehrere Sende/Empfangseinrichtungen (Transceiver) 1a, 1b, ... 1n, einen digitalen Signalprozessor 2, eine Steuer- und Schalteinrichtung 3 und eine dem Signalprozessor 2 zugeordnete, zwischen diesem und der Steuer- und Schalteinrichtung 3 vorgesehene Schnittstelleneinheit 5; die Sende/Empfangseinrichtungen 1a, 1b, ... 1n und die Schnittstelleneinheit 5 sind über Verbindungsleitungen 4 mit der Steuer- und Schalteinrichtung 3 verbunden.

Die Sende/Empfangseinrichtungen 1a, 1b, ... 1n, der Signalprozessor 2, die Steuer- und Schalteinrichtung 3 und die Verbindungsleitungen 4 entsprechen den Sende/Empfangseinrichtungen 11a, 11b, ... 11n, dem Signalprozessor 12, der Steuer- und Schalteinrichtung 13 und den Verbindungsleitungen 14 gemäß Figur 4.

An die Sende/Empfangseinrichtungen 1a, 1b, ... 1n sind in der Figur 1 nicht gezeigte Telekommunikationsendeinrichtungen und/oder eine oder mehrere Amtsleitungen anschließbar. Die Anzahl der vorzusehenden Sende/Empfangseinrichtungen 1a, 1b, ... 1n richtet sich nach der Anzahl und den Typen der anzuschließenden Telekommunikationsendeinrichtungen und Amtsleitungen. Beim betrachteten Beispiel möge die Sende/Empfangseinrichtung 1a zum Anschluß einer oder mehrerer herkömmlicher (analog arbeitender) Telekommunikationsendeinrichtungen, die Sende/Empfangseinrichtung 1b zum Anschluß einer oder mehrerer (digital arbeitender) ISDN-Telekommunikationsendeinrichtungen, und die Sende/Empfangseinrichtung 1n zum Anschluß einer oder mehrerer ISDN-Amtsleitungen ausgelegt (aufgebaut und/oder konfiguriert) sein.

Über eine Amtsleitung eingehende Rufe werden über die Sende/Empfangseinrichtung 1n zur Steuer- und Schalteinrichtung 3 und von dort zu der durch den Ruf angesprochenen Telekommunikationsendeinrichtung weitergeleitet; von den Telekommunikationsendeinrichtungen abgehende Rufe werden ebenfalls zur Steuer- und Schalteinrichtung 3 geführt und von dort zum Bestimmungsort, welches eine andere der an die Nebenstellenanlage angeschlossenen Telekommunikationsendeinrichtungen oder eine der angeschlossenen Amtsleitungen sein kann, durchgeschaltet.

Dem Signalprozessor 2 werden von der Steuer- und Schalteinrichtung 3 ausgewählte Daten und Informationen zugeführt, die die Nebenstellenanlage von den Telekommunikationsendeinrichtungen und den Amtsleitungen empfängt. Er verarbeitet die erhaltenen Daten bei Bedarf zu modifizierten Daten oder generiert neue Daten und gibt diese an die Steuer- und Schalteinrichtung 3 aus bzw. zurück. Die Steuer- und Schalteinrichtung 3 empfängt diese Daten und gibt sie anstelle der von den Telekommunikationsendeinrichtungen und den Amtsleitungen erhaltenen Daten zu den angesprochenen Telekommunikationsendeinrichtungen und Amtsleitungen aus.

Anders als bei herkömmlichen Nebenstellenanlagen kommunizieren der Signalprozessor 2 und die Steuer- und Schalteinrichtung 3 nicht direkt, sondern über die Schnittstelleneinheit 5 miteinander. Der Signalprozessor 2 und die Schnittstelleneinheit 5 arbeiten, wie nachfolgend noch genauer beschrieben wird, einander zu und ergänzen sich in ihrer Funktion und Wirkungsweise. Dadurch wird insbesondere der Signalprozessor 2 entlastet.

Wie bei herkömmlichen ISDN-Nebenstellenanlagen können dadurch Signaltöne und/oder Sprachsignale generiert und/oder kombiniert werden.

Die Verbindungsleitungen 4, über welche die Sende/Empfangseinrichtungen 1a, 1b, ... 1n und die Schnittstelleneinheit 5 mit der Steuer- und Schalteinrichtung 3 wie in der Figur 1 gezeigt miteinander verbunden sind, sind, obgleich dies in der Figur 1 nicht dargestellt ist, sogenannte IOM-Interfaces repräsentierende 4-Draht-Leitungen.

Das IOM-Interface, genauer gesagt das vorliegend verwendete IOM-2-Interface ist eine standardisierte Schnittstelle zur Kommunikation zwischen Chips (Interchipkommunikation) in ISDN-Systemen.

Von den vier Einzelleitungen die jeweils eine Verbindungsleitung 4 bilden, sind zwei Leitungen zur Taktsignalübertragung und zwei Leitungen zur Datenübertragung vorgesehen.

Die übertragenen Taktsignale sind ein sogenannter Frame-Synchronisations-Takt (8 kHz) und ein Daten-Takt (2,048 oder 4,096 oder 8,192 MHz), von welchen der Frame-Synchronisations-Takt über eine FSC-Leitung, und der Daten-Takt über eine DCL-Leitung übertragen werden.

Von den zwei Leitungen zur Datenübertragung dient eine sogenannte DD(data downstream)-Leitung zur Übertragung von Daten von der Steuer- und Schalteinrichtung 3 zu den Sende/Empfangsseinrichtungen 1a, 1b, ... 1n und der Schnittstelleneinheit 5, und eine sogenannte DU(data upstream)-Leitung zur Übertragung von Daten in der entgegengesetzten Richtung, d.h. von den Sende/Empfangsseinrichtungen 1a, 1b, ... 1n und der Schnittstelleneinheit 5 zur Steuer- und Schalteinrichtung 3.

Wie die vorstehenden Erläuterungen bereits vermuten lassen, werden die über die Datenleitungen DD und DU übertragenen Daten bitweise seriell in Einheiten von sogenannten Frames bzw. Rahmen übertragen, wobei ein Datenframe bzw. Datenrahmen je nach dem verwendeten Datentakt 256 oder 512 Bits umfaßt.

Jeder Datenframe bzw. Datenrahmen setzt sich wiederum aus 32 Bits umfassenden Blöcken (Kanälen) zusammen, von welchen 2 mal 8 Bits für die Nutzdaten (Sprachsignale, Faxsignale etc.) und zwei mal 8 Bits für Steuersignale und Zustandsinformationen bestimmt sind.

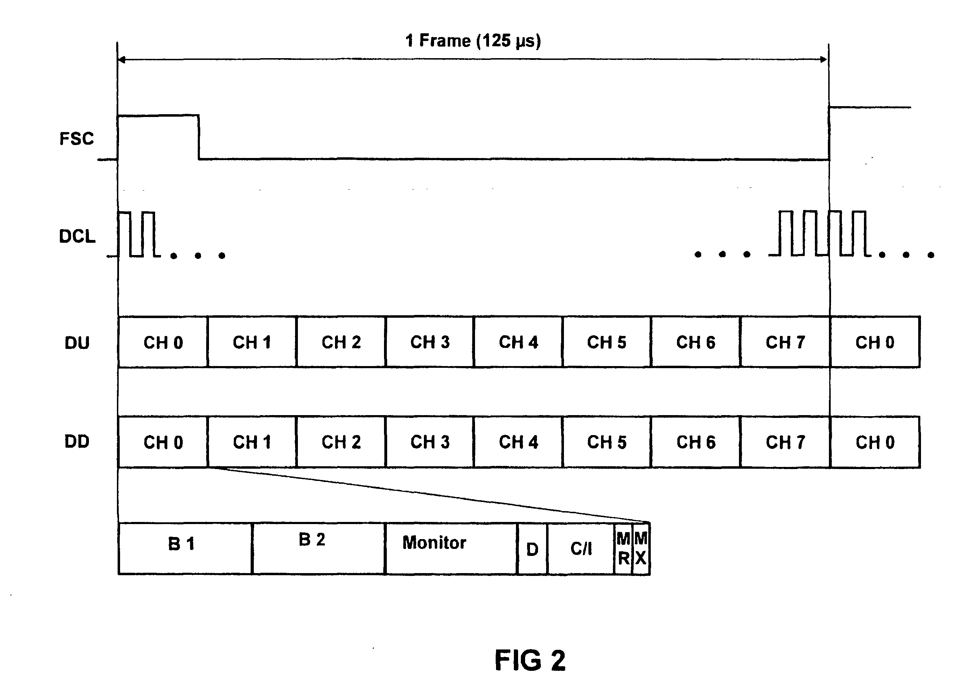

Die vorstehenden Ausführungen zum IOM-2-Interface und weitere Details sind für eine Datenrate von 2,048 MBit/s in Figur 2 veranschaulicht. Die dort verwendeten Abkürzungen haben folgende Bedeutung:
- FSC: Frame-Synchronisations-Takt (8 kHz)
- DCL: Daten-Takt (2,048 oder 4,096 MHz)
- DD: Downstream-Daten (2,048 MBit/s)
- DU: Upstream-Daten (2,048 MBit/s)
- B1, B2: B Channels (Nutzdaten)
- Monitor: Monitor Channel
- D: Signaling Channel
- CI: Command/Indication Channel
- MR: Monitor Receive handshake signal
- MX: Monitor Transmit handshake signal

Bezüglich weiterer Einzelheiten zum IOM-2-Interface wird auf die entsprechenden ETSI- und ANSI-Normen verwiesen.

Die Daten, die die Schnittstelleneinheit 5 von der Steuer-und Schalteinrichtung 3 über die Verbindungsleitung 4, genauer gesagt über die DD-Leitung derselben erhält, umfaßt Daten, die die Steuer- und Schalteinrichtung 3 von den angeschlossenen Telekommunikationsendeinrichtungen und Amtsleitungen erhält. Die Schnittstelleneinheit 5 und/oder der Signalprozessör 2 sind dadurch in die Lage versetzt, sofort und umfassend auf Ereignisse beliebiger Art zu reagieren. Dabei werden bei Bedarf über die DD-Leitung erhaltene Daten modifiziert und/oder neue Daten generiert (zumindest teilweise in Abhängigkeit von den ebenfalls über die DD-Leitung erhaltenen Steuerdaten und Zustandsinformationen). Die von der Schnittstelleneinheit 5 und/oder der Steuer- und Schalteinrichtung 3 modifizierten oder unverändert belassenen Daten werden schließlich über die Verbindungsleitung 4, genauer gesagt über die DU-Leitung derselben zur Steuer- und Schalteinrichtung 3 ausgegeben (zurückgeführt), von wo sie dann (über die jeweils entsprechenden DD-Leitungen der Verbindungsleitungen 4) zu den Telekommunikationsendeinrichtungen bzw. der oder den Amtsleitungen, für die sie bestimmt sind, weitergeleitet werden.

Wie aus der Figur 1 ersichtlich ist, besteht die Schnittstelleneinheit 5 im betrachteten Beispiel aus einer Vor- und Nachverarbeitungseinrichtung 51 und einer Speichereinrichtung 52.

Die Vor- und Nachverarbeitungseinrichtung 51 liest die von der Steuer- und Schalteinrichtung 3 über die Verbindungsleitung 4 übertragenen Daten ein, unterzieht sie einer Vorverarbeitung und schreibt sie in die Speichereinrichtung 52 ein, wo sie dann zur Abholung durch den Signalprozessor 2 und eine Weiterverarbeitung durch diesen bereitstehen. Der Signalprozessor 2 liest die in der Speichereinrichtung 52 bereitgestellten Daten aus dieser aus, verarbeitet sie weiter und schreibt sie in die Speichereinrichtung 52 ein, wo sie dann zur Abholung durch die Vor- und Nachverarbeitungseinrichtung 51 und eine Nachverarbeitung durch diese bereitstehen. Die Vor- und Nachverarbeitungseinrichtung 51 liest die in der Speichereinrichtung 52 bereitgestellten Daten aus dieser aus, führt eine abschließende Nachverarbeitung durch und gibt die Daten schließlich über die DU-Leitung der Verbindungsleitung 4 zur Steuer- und Schalteinrichtung 3 aus.

Die erwähnte Vorverarbeitung, die durch die Vor- und Nachverarbeitungseinrichtung 51 durchgeführt wird, besteht im betrachteten Beispiel in einer Seriell/Parallel-Wandlung der bitweise seriell eingelesenen Daten und in einer Konvertierung, genauer gesagt einer µ-law- oder a-law-Konvertierung ausgewählter Daten. Die besagte µ-law- oder a-law-Konvertierung dient einer Expandierung der zur Übertragung pegelabhängig komprimierten Nutzdaten; a-law und µ-law sind unterschiedliche Standards, wobei der µ-law-Standard in den USA, in Kanada, in Japan und auf den Philippinen, und der a-law-Standard in den anderen Staaten benutzt wird.

Neben den genannten Vorverarbeitungsschritten können in der Vor- und Nachverarbeitungseinrichtung 51 alternativ oder zusätzlich auch andere bzw. weitere Verarbeitungsschritte durchgeführt werden. Welche und wie viele Verarbeitungsschritte in der Vor- und Nachverarbeitungseinrichtung 51 ausgeführt werden, hängt vom jeweiligen Einzelfall ab. Allgemein gesprochen ist anzustreben, daß die erhaltenen Daten durch eine wie auch immer geartete Vorverarbeitung so aufbereitet werden, daß sie anschließend durch den Signalprozessor 2 möglichst effizient weiterverarbeitet werden können. Im Ergebnis soll der Signalprozessor 2 dadurch von aufwandsintensiven Tätigkeiten befreit werden, deren Ausführung anderweitig effizient(er) bewerkstelligbar ist.

Umgekehrt werden bei der Nachverarbeitung der vom Signalprozessor 2 verarbeiteten und/oder generierten Daten eine Rekonvertierung und eine Parallel/Seriell-Wandlung der Daten durchgeführt. Die Daten können darüber hinaus (beispielsweise über eine sogenannte Tri-State-Control-Leitung) auch (beispielsweise time-slot-weise) als ungültig gekennzeichnet werden.

Neben den genannten Nachverarbeitungsschritten können in der Vor- und Nachverarbeitungseinrichtung 51 alternativ oder zusätzlich auch andere bzw. weitere Verarbeitungsschritte durchgeführt werden. Welche und wie viele Verarbeitungsschritte in der Vor- und Nachverarbeitungseinrichtung 51 ausgeführt werden, hängt vom jeweiligen Einzelfall ab. Allgemein gesprochen ist anzustreben, daß die Nachverarbeitung der erhaltenen Daten dort einsetzt, wo die Verarbeitung der Daten durch den Signalprozessor 2 uneffizient zu werden beginnen würde. Im Ergebnis soll der Signalprozessor 2 dadurch von aufwandsintensiven Tätigkeiten befreit werden, deren Ausführung anderweitig effizient(er) bewerkstelligbar ist.

Die schließlich über die DU-Leitung der Verbindungsleitung 4 zur Steuer- und Schalteinrichtung 3 ausgegebenen Daten weisen wieder das IOM-Format, genauer gesagt das IOM-2-Format auf.

Bei der Vorverarbeitung und der Nachverarbeitung der Daten durch die Vor- und Nachverarbeitungseinrichtung 51 erweist es sich als vorteilhaft, wenn die hierzu von der Vor- und Nachverarbeitungseinrichtung 51 durchzuführenden Verarbeitungsschritte einen einfachen Aufbau und einen einfachen Betrieb der Vor- und Nachverarbeitungseinrichtung 51 ermöglichen. Dies ist im vorliegend betrachteten Beispiel gegeben, denn weder die Seriell/Parallel-Wandlung noch Parallel/Seriell-Wandlung noch die Datenkonvertierung, welche hier tabellenorientiert unter Verwendung eines ROM-Speichers durchgeführt wird, erfordern einen sonderlich großen Aufwand beim Aufbau und beim Betrieb der Vor- und Nachverarbeitungseinrichtung 51.

Die Speichereinrichtung 52, in welche bzw. aus welcher die durch die Vor- und Nachverarbeitungseinrichtung 51 vorverarbeiteten und die durch den Signalprozessor 2 weiterverarbeiteten Daten eingeschrieben bzw. ausgelesen werden, ist ein oder verhält sich wie ein sogenanntes Dual Port RAM (DPRAM). DPRAMS zeichnen sich dadurch aus, daß auf diese gleichzeitig mehrere Schreib- und/ oder Lesezugriffe erfolgen können. Das besagte DPRAM kann im betrachteten Ausführungsbeispiel sowohl von der Vor- und Nachverarbeitungseinrichtung 51 als auch vom Signalprozessor 2 beschrieben und ausgelesen werden. Von der Vor- und Nachverarbeitungseinrichtung 51 in die Speichereinrichtung 52 eingeschriebene Daten können also vom Signalprozessor 2 eigeninitiativ aus dieser ausgelesen werden, und umgekehrt können vom Signalprozessor 2 in die Speichereinrichtung 52 eingeschriebene Daten von der Vor- und Nachverarbeitungseinrichtung 51 eigeninitiativ aus dieser ausgelesen werden.

Die Verarbeitung der Daten und deren Zwischenspeicherung in der Speichereinrichtung 52 erfolgt im betrachteten Beispiel in Einheiten von Frames, welche, wie vorstehend bereits erwähnt wurde, aus 256 Bit (langsame IOM-Schnittstelle) oder 512 Bit (schnelle IOM-Schnittstelle) bestehen.

Die Speichereinrichtung 52 ist in der Lage, die Daten von vier Frames zu speichern; sie ist hierzu in vier Bereiche unterteilt, wobei pro Bereich jeweils die Daten eines Frames speicherbar sind. Von den vier Speicherbereichen sind zwei Speicherbereiche für das Einschreiben von Daten durch die Vor- und Nachverarbeitungseinrichtung 51 und das Auslesen der Daten durch den Signalprozessor 2, und zwei Speicherbereiche für das Einschreiben von Daten durch den Signalprozessor 2 und das Auslesen der Daten durch die Vor- und Nachverarbeitungseinrichtung 51 reserviert.

Von den zwei Speicherbereichen, die für das Einschreiben von Daten durch die Vor- und Nachverarbeitungseinrichtung 51 und das Auslesen der Daten durch den Signalprozessor 2 reserviert sind, werden in einen (durch die Vor- und Nachverarbeitungseinrichtung 51) neue Daten eingeschrieben und aus dem anderen (durch den Signalprozessor 2) zuvor eingeschriebene Daten ausgelesen. Der Speicherbereich, in welchen durch die Vor-und Nachverarbeitungseinrichtung 51 neue Daten eingeschrieben werden, und der Speicherbereich, aus welchem durch den Signalprozessor 2 Daten ausgelesen werden, werden nach jedem Frame vertauscht. Dadurch kann erreicht werden, daß der Signalprozessor 2 nur bereits vollständig in die Speichereinrichtung eingeschriebene Frames liest, und daß der gerade gelesene Frame nicht schon während des Auslesens wieder überschrieben wird.

Entsprechendes gilt für das Einschreiben von Daten durch den Signalprozessor 2 in die Speichereinrichtung 52 und das Auslesen dieser Daten durch die Vor- und Nachverarbeitungseinrichtung 51. Von den zwei Speicherbereichen, die für das Einschreiben von Daten durch den Signalprozessor 2 und das Auslesen der Daten durch die Vor- und Nachverarbeitungseinrichtung 51 reserviert sind, werden in einen (durch den Signalprozessor 2) neue Daten eingeschrieben und aus dem anderen (durch die Vor- und Nachverarbeitungseinrichtung 51) zuvor eingeschriebene Daten ausgelesen. Der Speicherbereich, in welchen durch den Signalprozessor 2 neue Daten eingeschrieben werden, und der Speicherbereich, aus welchem durch die Vor-und Nachverarbeitungseinrichtung 51 Daten ausgelesen werden, werden nach jedem Frame vertauscht. Dadurch kann erreicht werden, daß die Vor- und Nachverarbeitungseinrichtung 51 nur bereits vollständig in die Speichereinrichtung eingeschriebene Frames liest, und daß der gerade gelesene Frame nicht schon während des Auslesens wieder überschrieben wird.

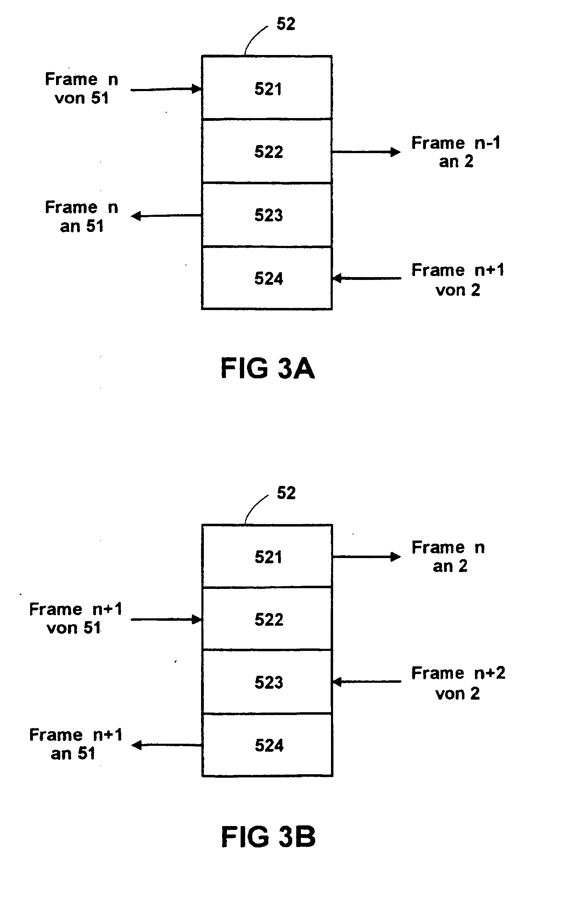

Diese Vorgehensweise wird nachfolgend unter Bezugnahme auf die Figuren 3A und 3B erläutert. Die Figuren 3A und 3B veranschaulichen schematisch die Speichereinrichtung 52 und das Einschreiben und Auslesen von Daten in dieselbe bzw. aus derselben.

Die vier Speicherbereiche der Speichereinrichtung 52 sind in den Figuren mit den Bezugszeichen 521 bis 524 bezeichnet.

Wie aus der Figur 3A ersichtlich ist, wird dort zu einem gegebenen Zeitpunkt
- durch die Vor- und Nachverarbeitungseinrichtung 51 ein (Eingabe-)Frame n in den Speicherbereich 521 eingeschrieben, und
- durch den Signalprozessor 2 aus dem Speicherbereich 522 ein zuvor dort eingeschriebener (Eingabe-)Frame n-1 ausgelesen. Ähnlich wird
- durch den Signalprozessor 2 ein (Ausgabe-)Frame n+1 in den Speicherbereich 524 eingeschrieben, und
- durch die Vor- und Nachverarbeitungseinrichtung 51 aus dem Speicherbereich 523 ein zuvor dort eingeschriebener (Ausgabe-)Frame n ausgelesen.

Wie aus der Figur 3B ersichtlich ist, wird dort zu einem späteren, genauer gesagt zu einem einen Frame (125 µs) späteren Zeitpunkt
- durch die Vor- und Nachverarbeitungseinrichtung 51 ein (Eingabe-)Frame n+1 in den Speicherbereich 522 eingeschrieben, und
- durch den Signalprozessor 2 aus dem Speicherbereich 521 der unmittelbar zuvor dort eingeschriebene (Eingabe-)Frame n ausgelesen.

Ähnlich wird
- durch den Signalprozessor 2 ein (Ausgabe-)Frame n+2 in den Speicherbereich 523 eingeschrieben, und
- durch die Vor- und Nachverarbeitungseinrichtung 51 aus dem Speicherbereich 524 der unmittelbar zuvor dort eingeschriebene (Ausgabe-)Frame n+1 ausgelesen.

Wieder einen Frametakt später wird auf die Speichereinrichtung 52 wie in der Figur 3A gezeigt zugegriffen.

Obgleich dies nicht im einzelnen beschrieben ist, können die einzelnen Speicherbereiche 521 bis 524 bei Bedarf in eine beliebige Anzahl von Blöcken unterteilt sein, auf die in beliebiger Reihenfolge zugegriffen werden kann.

Der Zugriff auf die Speichereinrichtung 52 durch die Vor- und Nachverarbeitungseinrichtung 51 und den Signalprozessor 2 kann unmittelbar durch diese oder "nur" mittelbar über eine DMA-Einheit erfolgen. Letzteres, d.h. der Zugriff auf die Speichereinrichtung 52 über eine DMA-Einheit erweist sich insbesondere im Fall der Vor- und Nachverarbeitungseinrichtung 51 als vorteilhaft.

Aus den vorstehenden Erläuterungen wird deutlich, daß der Signalprozessor 2 gegenüber dem Fall, daß dieser wie bisher unmittelbar, also ohne Zwischenschaltung der (im Vergleich zum Signalprozessor 2 flächenmäßig vergleichsweise sehr klein realisierbaren) Schnittstelleneinheit 5 mit der Steuer- und Schalteinrichtung 3 verbunden ist, arbeitsmäßig erheblich entlastet ist. Dadurch kann er nunmehr Aufgaben übernehmen, die er zuvor mangels Leistungsreserven nicht übernehmen konnte.

Zwischen der Schnittstelleneinheit 5 und der Steuer- und Schalteinrichtung 3 und/oder dem Signalprozessor 2 können beliebig formatierte Daten beliebigen Inhalts ausgetauscht werden. Es besteht folglich auch keine Einschänkung auf die Verwendung des IOM- bzw. IOM-2-Formats; statt dessen können beliebige andere (standardisierte oder nicht standardisierte) Datenformate, gegebenenfalls auch abwechselnd verschiedene Datenformate verwendet werden.

Es wurden mithin ein Verfahren und eine Vorrichtung gefunden, durch welche selbst ein arbeitsintensives Verarbeiten und Generieren von Daten mit leistungsschwachen und/oder einer minimalen Anzahl von Signalprozessoren bewerkstelligbar ist.

## Patentansprüche

1. Vorrichtung zum Verarbeiten und Generieren von Daten unter Verwendung eines digitalen Signalprozessors (2), wobei eine dem Signalprozessor (2) zugeordnete Schnittstelleneinheit (5) vorgesehen ist, welche die zu verarbeitenden Daten und/oder zur Verarbeitung und/oder Generierung von Daten benötigte Daten einliest, vorverarbeitet und zur Abholung durch den Signalprozessor bereitstellt und/oder vom Signalprozessor verarbeitete oder generierte und zur Abholung bereitgestellte Daten abholt, nachverarbeitet und ausgibt, wobei die Schnittstelleneinheit (5) eine zur Vor- und Nach- verarbeitung der Daten vorgesehene Vor- und Nachverarbeitungseinrichtung (51) und eine für die Bereitstellung der vorvererbeiteten und nachzuverarbeitenden Daten zur Abholung durch den Signalprozessor (2) oder die Vor- und Nachverarbeitungseinrichtung (51) vorgesehene Speichereinrichtung (52) aufweist, wobei die Vor- und Nachverarbeitungseinrichtung (51) eine Expandier/Komprimiereinrichtung aufweist, durch welche die eingelesenen Daten expandierbar und die auszugebenden Daten komprimierbar sind, wobei die Speichereinrichtung (52) derart ausgebildet ist, daß die Vor- und
Nachverarbeitungseinrichtung (51) und der Signalprozessor (2) quasi gleichzeitig lesend und/oder schreibend darauf zugreifen können,
**dadurch gekennzeichnet,**
**daß** die Speichereinrichtung (52) in vier Speicherbereiche (521-524) unterteilt ist, von welchen zwei Speicherbereiche (521, 522) zum Beschreiben durch die Vor- und
Nachverarbeitungseinrichtung (51) und Auslesen durch den Signalprozessor (2), und von welchem die anderen zwei Speicherbereiche (523, 524) zum Beschreiben durch den Signalprozessor (2) und Auslesen durch die Vor- und Nachverarbeitungseinrichtung (51) reserviert sind.

2. Vorrichtung nach Anspruch 1.
**dadurch gekennzeichnet**
**daß** von den Speicherbereichen (521, 522), die zum Beschreiben durch die Vor- und Nachverarbeitungseinrichtung (51) und Auslesen durch den Signalprozessor (2) reserviert sind, einer für den Schreibzugriff und einer für den Lesezugriff reserviert ist, wobei der Speicherbereich, der für den Schreibzugriff reserviert ist, und der Speicherbereich, der für den Lesezugriff reserviert ist, während des Betriebs zyklisch vertauscht werden.

3. Vorrichtung nach Anspruch 1 oder 2,
**dadurch gekennzeichnet**
**daß** von den Speicherbereichen (523, 524), die zum Beschreiben durch den Signalprozessor (2) und Auslesen durch die Vor- und Nachverarbeitungseinrichtung (51) reserviert sind, einer für den Schreibzugriff und einer für den Lesezugriff reserviert ist, wobei der Speicherbereich, der für den Schreibzugriff reserviert ist, und der Speicherbereich, der für den Lesezugriff reserviert ist, während des Betriebs zyklisch vertauscht werden.

4. Vorrichtung nach einem der Ansprüche 1 bis 3,
**dadurch gekennzeichnet**
**daß** die Vorrichtung Bestandteil einer ISDN-Vermittlungsanlage ist.

5. Vorrichtung nach Anspruch 4,
**dadurch gekennzeichnet**
**daß** die Speicherbereiche der Speichereinrichtung (52) groß genug sind, um die dekomprimierten Daten eines IOM-2-Frames darin speichern zu können.

6. Vorrichtung nach einem der vorhergehenden Ansprüche,
**dadurch gekennzeichnet**
**daß** die Vor- und Nachverarbeitungseinrichtung (51) einen Seriell/Parallel-Wandler aufweist, durch welchen seriell eingelesene Daten in parallele Daten umsetzbar sind.

7. Vorrichtung nach einem der Ansprüche 1 bis 5,
**dadurch gekennzeichnet**
**daß** die Vor- und Nachverarbeitungseinrichtung (51) einen Parallel/Seriell-Wandler aufweist, durch welchen parallel erhaltene Daten in serielle Daten umsetzbar sind.

8. Vorrichtung nach einem der vorhergehenden Ansprüche,
**dadurch gekennzeichnet**
**daß** die Expandiereinrichtung und die Komprimiereinrichtung zum Expandieren und Komprimieren unter Verwendung von in einer Festspeichereinrichtung gespeicherten Tabellen ausgelegt sind.

## Claims

1. Apparatus for processing and generating data using a digital signal processor (2), having an interface unit (5) which is allocated to the signal processor (2) and reads in and preprocesses the data to be processed and/or data required for processing and/or generating data and supplies it for the signal processor to pick up and/or picks up, postprocesses and outputs data which the signal processor processes or generates and supplies for pickup, the interface unit (5) having a pre- and postprocessing device (51) provided for pre- and postprocessing the data, and a memory device (52) provided for supplying the data which has been preprocessed and is to be postprocessed for the signal processor (2) or the pre- and postprocessing device (51) to pick up, the pre- and postprocessing device (51) having an expansion/compression device which can be used to expand the data read in and to compress the data to be output, the memory device (52) being designed such that the pre- and postprocessing device (51) and the signal processor (2) can have read and/or write access to it at virtually the same time, **characterized in that** the memory device (52) is divided into four memory areas (521-524), two of which memory areas (521, 522) are reserved for the pre- and postprocessing device (51) to write to and for the signal processor (2) to read from, and the other two of which memory areas (523, 524) are reserved for the signal processor (2) to write to and for the pre- and postprocessing device (51) to read from.

2. The apparatus according to Claim 1, **characterized in that**, of the memory areas (521, 522) reserved for the pre- and postprocessing device (51) to write to and for the signal processor (2) to read from, one is reserved for write access and one for read access, the memory area reserved for write access and the memory area reserved for read access being interchanged cyclically during operation.

3. The apparatus according to Claim 1 or 2, **characterized in that**, of the memory areas (523, 524) reserved for the signal processor (2) to write to and for the pre- and postprocessing device (51) to read from, one is reserved for write access and one for read access, the memory area reserved for write access and the memory area reserved for read access being interchanged cyclically during operation.

4. The apparatus according to one of Claims 1 to 3, **characterized in that** the apparatus is an integral part of an ISDN switching system.

5. The apparatus according to Claim 4, **characterized in that** the memory areas of the memory device (52) are large enough for it to be possible for them to store the decompressed data in an IOM-2 frame.

6. The apparatus according to one of the preceding claims, **characterized in that** the pre- and postprocessing device (51) has a serial/parallel converter which can be used to convert data read in serially into parallel data.

7. The apparatus according to one of Claims 1 to 5, **characterized in that** the pre- and postprocessing device (51) has a parallel/serial converter which can be used to convert data received in parallel form into serial data.

8. The apparatus according to one of the preceding claims, **characterized in that** the expansion device and the compression device are designed for expansion and compression using tables stored in a read-only memory device.

## Revendications

1. Dispositif pour traiter et générer des données en utilisant un processeur numérique de signal (2), comprenant une unité d'interface (5) prévue associée au processeur de signal (2), laquelle charge les données à traiter et/ou les données nécessaires au traitement et/ou à la génération des données, leur fait subir un traitement préalable et les met à disposition en vue de leur récupération par le processeur de signal et/ou récupère les données traitées ou générées par le processeur de signal et mises à disposition en vue de leur récupération, leur fait subir un traitement postérieur et les diffuse, l'unité d'interface (5) présentant un dispositif de traitement préalable et postérieur (51) prévu pour le traitement préalable et postérieur des données et un dispositif de mémorisation (52) prévu pour la mise à disposition des données pré-traitées et à soumettre à un traitement postérieur en vue de leur récupération par le processeur de signal (2) ou par le dispositif de traitement préalable et postérieur (51), le dispositif de traitement préalable et postérieur (51) présentant un dispositif d'expansion/compression par le biais duquel les données chargées peuvent être expansées et les données à délivrer peuvent être comprimées, le dispositif de mémorisation (52) étant configuré de telle sorte que le dispositif de traitement préalable et postérieur (51) et le processeur de signal (2) peuvent y accéder quasi-simultanément en lecture et/ou en écriture, **caractérisé en ce que** le dispositif de mémorisation (52) est divisé en quatre zones de mémoire (521-524) dont deux zones de mémoire (521, 522) sont réservées à l'écriture par le dispositif de traitement préalable et postérieur (51) et au chargement par le processeur de signal (2) et dont les deux autres zones de mémoire (523, 524) sont réservées à l'écriture par le processeur de signal (2) et au chargement par le dispositif de traitement préalable et postérieur (51).

2. Dispositif selon la revendication 1, **caractérisé en ce que** parmi les deux zones de mémoire (521, 522) qui sont réservées à l'écriture par le dispositif de traitement préalable et postérieur (51) et au chargement par le processeur de signal (2), l'une est réservée à l'accès en écriture et l'autre à l'accès en lecture, la zone de mémoire réservée à l'accès en écriture et la zone de mémoire réservée à l'accès en lecture étant interverties de manière cyclique pendant le fonctionnement.

3. Dispositif selon la revendication 1 ou 2, **caractérisé en ce que** parmi les deux zones de mémoire (523, 524) qui sont réservées à l'écriture par le processeur de signal (2) et au chargement par le dispositif de traitement préalable et postérieur (51), l'une est réservée à l'accès en écriture et l'autre à l'accès en lecture, la zone de mémoire réservée à l'accès en écriture et la zone de mémoire réservée à l'accès en lecture étant interverties de manière cyclique pendant le fonctionnement.

4. Dispositif selon l'une des revendications 1 à 3, **caractérisé en ce que** le dispositif fait partie intégrante d'un autocommutateur pour RNIS.

5. Dispositif selon la revendication 4, **caractérisé en ce que** les zones de mémoire du dispositif de mémorisation (52) sont suffisamment grandes pour pouvoir y enregistrer les données décompressées d'une trame IOM-2.

6. Dispositif selon l'une des revendications précédentes, **caractérisé en ce que** le dispositif de traitement préalable et postérieur (51) présente un convertisseur série/parallèle par le biais duquel les données chargées en série peuvent être converties en données parallèles.

7. Dispositif selon l'une des revendications 1 à 5, **caractérisé en ce que** le dispositif de traitement préalable et postérieur (51) présente un convertisseur parallèle/série par le biais duquel les données reçues en parallèles peuvent être converties en données série.

8. Dispositif selon l'une des revendications précédentes, **caractérisé en ce que** le dispositif d'expansion et le dispositif de compression sont conçus pour réaliser l'expansion et la compression en utilisant des tableaux enregistrés dans un dispositif de mémorisation permanente.
